# EUROPEAN PATENT APPLICATION

(11) **EP 4 726 447 A1**
(43) Date of publication of application: **15.04.2026**
(21) Application number: 25197088.5
(22) Date of filing: 20.08.2025
(51) Int. Cl.: G02B 6/38

(54) **HARDENED CONNECTOR HAVING LOCKING FEATURE FOR ENGAGING WITH AN OPTICAL FIBER TERMINAL**

(30) Priority: 10.10.2024 IN 202411077097
(71) Applicant: Sterlite Technologies Limited, Gurugram, Haryana 122102 (IN)
(72) Inventor: Wang, Wayne, Shenzhen City, Guangdong Province, 518126 (CN); Gopi, Ajayakumar, 122102 Gurugram, Haryana (IN); Vinod, Arjun, 122102 Gurugram, Haryana (IN); Balachandran, Binod, 122102 Gurugram, Haryana (IN)
(74) Representative: Petraz, Gilberto Luigi

(57) **Abstract**

The present disclosure provides a hardened connector (100) configured to engage with a port (52) of an optical fiber terminal (50) comprises a multi-part assembly (102) with protruded skirt (108) positioned between a front end (104) and a rear end (106); a first intermediate portion (110) positioned between the rear end (106) and the protruded skirt (108) and a channel (130) formed between plurality of extended fingers and a recessed portion (118) configured to receive a mating protrusion (56) provided in the port, thereby enabling alignment of the hardened connector in the port of the optical fiber terminal. The protruded skirt (108) and the first intermediate portion (110) enable locking of the hardened connector (100) within the port, when the front end of the hardened connector is pushed into the port.

## Description

### TECHNICAL FIELD

Embodiments of the present disclosure relate to the field of wireless communication networks of optical fibres, and in particular, relates to a hardened connector for engaging at least one optical fiber with an optical fiber terminal.

The present application claims the benefit of Indian Application No. 202411077097 titled "HARDENED CONNECTOR HAVING LOCKING FEATURE FOR ENGAGING WITH AN OPTICAL FIBER TERMINAL" filed by the applicant on October 10, 2024 which is incorporated herein by reference in its entirety.

### Background Art

Modern optical devices and optical communications systems widely use fiber optic cables. Fiber optic cables are often used to transmit light signals for high speed data transmission. A fiber optic cable typically includes an optical fiber or optical fibers, a buffer or buffers that surround the fiber or fibers, a strength layer that surrounds the buffer or buffers, and an outer jacket. The optical fibers function to carry optical signals.

Optical fiber refers to the technology and the medium for the transmission of data as light pulses along an ultrapure strand of glass, which is as thin as a human hair. For many years, optical fibers have been extensively used in high-performance and long-distance data and networking.

Telecommunication cables are ubiquitous and used for distributing all manner of data across vast networks. The majority of cables are electrically conductive cables (typically copper), although the use of optical fiber cable is growing rapidly in telecommunication systems as larger and larger amounts of data are transmitted. Additionally, as data transmissions increase, the fiber optic network is being extended closer to the end user which can be a premise, business, or a private residence.

Optical fiber cables utilize optical fibers to transmit signals such as voice, video, image, data or information. Optical fibers are strands of glass fiber processed so that light beams transmitted through the glass fiber are subject to total internal reflection wherein a large fraction of the incident intensity of light directed into the fiber is received at the other end of the fiber.

Fiber optic cables are widely used to transmit light signals for high-speed data transmission. A fiber optic cable typically includes: (1) one or more optical fibers; (2) one or more buffers that surround the one more optical fibers; (3) at least one strengthening layer that surrounds the one mor more buffers; and (4) an outer jacket. Moreover, typical optical fiber includes at least one cylindrical glass region and a polymer region surrounding the at least one cylindrical glass region. The at least one cylindrical glass region comprises at least one core surrounded by a cladding region.

In case the fiber optic cable is to be connected to an optical fiber terminal, there is provided at least one connector at the end of the fiber optic cable. The connector generally includes a ferrule that receives the at least one cylindrical glass region of the at least one optical fiber of the fiber optic cable. The optical fiber terminal includes ports (i.e., receptacles) for receiving the connector. Each port of the optical fiber terminal generally includes an alignment mechanism for aligning the connector in a particular orientation. Only when the ferrule is properly aligned in the port of the optical fiber terminal, an optical signal can pass from the fiber optic cable to the optical fiber terminal. Additionally, the port of the optical fiber terminal comprises a locking mechanism for locking the connector so that the connector does not get inadvertently detached from the port of the optical fiber terminal.

The optical fibre industry is constantly involved in reducing the size of the hardened connector. However, creating a hardened connector having smaller size, providing an alignment mechanism on the hardened connector which is easy to manufacture as well as which properly aligns the ferrule of the hardened connector with the ferrule in the optical fiber terminal port becomes a technical challenge. Also, it has been found that simply reducing the size of the alignment mechanism provided on the hardened connector does not serve the purpose.

Additionally, creating a hardened connector having smaller size, providing a locking mechanism on the hardened connector which is easy to manufacture and which ensures that the connector does not get inadvertently detached from the port of the optical fiber terminal becomes a technical challenge. Also, it has been found that simply reducing the size of the locking mechanism provided on the hardened connector does not serve the purpose.

Accordingly, to overcome the disadvantages of the prior arts, there is a need for a technical solution to provide an locking mechanism on the hardened connector which is ease to manufacture, prohibits the connector from getting inadvertently detached from the port of the optical fiber terminal, and also which allows for reducing a size of the hardened connector to overcome the above-stated limitations in the prior arts. Thus, there exists a need to provide an alignment mechanism on the hardened connector which is easy to manufacture, which properly aligns the ferrule of the hardened connector with the ferrule in the optical fiber terminal port, and also which allows for reducing the size of the hardened connector .

Therefore, the present disclosure discloses a hardened connector for engaging with an optical fiber terminal.

### SUMMARY OF THE DISCLOSURE

Embodiments of the present disclosure relates to a hardened connector for engaging at least one optical fiber with an optical fiber terminal. In particular, the hardened connector is adapted to engage with a port forming part of the optical fiber terminal, with the port comprising one or more movable feature protruding radially inwardly towards a center portion of the port. Moreover, the hardened connector comprises a multi-part assembly comprising a front end; a rear end; a protruded skirt positioned between the front end and the rear end; and a first intermediate portion positioned between the rear end and the protruded skirt. Further, the protruded skirt comprises a front portion located proximate to the front end of the multi-part assembly; a rear portion located proximate to the first intermediate portion of the multi-part assembly; and a second intermediate portion positioned between the front portion and the rear portion.

According to the first aspect of the present disclosure,a hardened connector is configured for engaging at least one optical fiber with an optical fiber terminal

According to the second aspect of the present disclosure, the first intermediate portion has a first elevation, the front portion has a second elevation, the rear portion has a third elevation, and the second intermediate portion a varying elevation. In particular, the third elevation is greater than the first elevation and the second elevation. Further, the varying elevation varies between the second elevation and the third elevation.

According to the third aspect of the present disclosure, the protruded skirt and the first intermediate portion enable locking of the hardened connector within the port of the optical fiber terminal, when the front end of the hardened connector is pushed into the port.

According to the fourth aspect of the present disclosure,the second intermediate portion comes in contact with the one or more movable feature when a first force is exerted on the hardened connector. Thereby, causing the variable elevation to exert radially outward force on the one or more movable feature to displace the one or more movable features in a radially outward direction from an initial position.

According to the fifth aspect of the present disclosure, the first intermediate portion comes in contact with the one or more movable feature when a second force is applied on the hardened connector, causing release of the radially outward force exerted by the second intermediate portion on the one or more movable feature and causing the one or more movable features to attain the initial position, thereby locking the hardened connector within the port of the optical fiber terminal.

According to the sixth aspect of the present disclosure, the protruded skirt has a skirt length parallel to the connector axis, where the skirt length is less than a connector length. Further, the skirt length is in a range of 8mm to 15mm. Further, the protruded skirt is positioned on the connecting portion near a mating interface of the hollow cylindrical body and the connecting portion.

According to the seventh aspect of the present disclosure, the hardened connector comprises a recessed portion beginning at the front end and extending rearward at least till the first intermediate portion. In particular, the hardened connector has a small form factor, having a diameter less than or equal to 13 mm. Moreover, the hardened connector is configured to engage with a port of an optical fiber terminal. Further, the hardened connector comprises a locking portion defined by a front wall portion and a rear wall portion. The front wall portion and the rear wall portion prevents relative axial movement between the hardened connector and the port along an axis of the hardened connector, when a movable feature of the port or the optical fiber terminal is inserted between the front wall portion and the rear wall portion.

In accordance with an embodiment of the present disclosure, the insertion of the movable feature is perpendicular to the axis of the hardened connector.

In accordance with an embodiment of the present disclosure, the front wall portion is formed by a protruded skirt located over a connecting portion of the hardened connector and the connecting portion is located near the middle of the hardened connector.

In accordance with an embodiment of the present disclosure, the rear wall portion is formed by a hollow cylindrical body of the hardened connector and the hollow cylindrical body is located near the rear of the hardened connector.

In accordance with an embodiment of the present disclosure, the front wall portion and the rear wall portion are connected by side wall portions. The side wall portions can be one or more of slanted portion or elevated portion or flat portion and the side wall portions contribute to prevent the relative rotational movement between the hardened connector and the port.

In accordance with an embodiment of the present disclosure, a hardened connector is configured to engage with a port of an optical fiber terminal such that relative rotational movement between the hardened connector and the port is restricted at the side wall portions. In particular, the relative rotational movement between the hardened connector and the port is restricted by engagement of side wall portions connecting a front wall portion and a rear wall portion of a locking portion with a movable feature of the port. Further the engagement of an optical fiber plug with mating shape of the terminal also restricts the relative rotational movement.

In accordance with an embodiment of the present disclosure, a hardened connector is configured to engage with a port of an optical fiber terminal, where the hardened connector is inserted into the port such that at-least 35% of the hardened connector length goes inside the optical fiber terminal.

In accordance with an embodiment of the present disclosure, the hardened connector includes an optical fiber plug with a ferrule having an allowable axial movement of 0.1 mm inside the hardened connector after engagement of the hardened connector to the optical fiber terminal.

According to the eighth aspect of the present disclosure, the recessed portion has a recessed length parallel to the connector axis, where the recessed length is less than a connector length and greater than the skirt length. In particular, the recessed portion has an angular width in a range of 30° to 90° as measured along a circumferential direction of the hardened connector. Moreover, the recessed portion has a fifth elevation along the entire recessed length and along the entire angular width, the fifth elevation being less than the first elevation and the second elevation.

According to the ninth aspect of the present disclosure, the multi-part assembly comprises a hollow cylindrical body comprising a plurality of extended fingers at a first end of the hollow cylindrical body. In particular, the multi-part assembly comprises a connecting portion configured to be removably engaged to the hollow cylindrical body by insertion into the hollow cylindrical body. Moreover, the multi-part assembly comprises a channel formed between the plurality of extended fingers of the hollow cylindrical body and at least one part of the connecting portion, when the connecting portion is engaged to the hollow cylindrical body. Further, the multi-part assembly comprises an optical fiber plug removably engaged with the connecting portion.

According to the tenth aspect of the present disclosure, the channel is configured to receive a mating protrusion provided in the port, thereby enabling alignment of the hardened connector in the port of the optical fiber terminal. In particular, the optical fiber plug defines the front end of the hardened connector. Moreover, the connecting portion comprises a connecting circumferential portion defining the protruded skirt and the channel, the channel being defined by a flat surface. Further, the hollow cylindrical body and the connecting portion are coupled via a snap-fitting mechanism.

Another embodiment of the present disclosure, Additionally, the present disclosure provides a method of locking the hardened connector in the port of the optical fiber terminal, the method comprising: inserting the front end of the hardened connector into the terminal port of the optical fiber terminal; applying a first force on the hardened connector such that the second intermediate portion comes in contact with the one or more movable feature provided in the port and the variable elevation exerts radially outward force on the one or more movable feature to displace the one or more movable features in a radially outward direction from an initial position; and applying a second force on the hardened connector such that the first intermediate portion of the hardened connector comes in contact with the one or more movable feature, thereby releasing the radially outward force exerted on the one or more movable feature by the second intermediate portion and causing the one or more movable features to attain the initial position. In some aspects, the one or more movable feature is a spring-loaded tab.

In accordance with an embodiment of the present disclosure, the method of unlocking the hardened connector from the port of the optical fiber terminal comprises: exerting radially outward force on the one or more movable features of the port; pulling out the hardened connector from the port; and releasing the movable features of the ports.

In accordance with an embodiment of the present disclosure, the method of aligning the hardened connector in a port of the optical fiber terminal comprises: receiving a mating protrusion on the port by a channel formed between the plurality of extended fingers of the hollow cylindrical body and at least one part of the connecting portion when the connecting portion is engaged to the hollow cylindrical body; and optionally rotating the hardened connector till the mating protrusion is received by the channel.

The foregoing objectives of the present disclosure are attained by employing a hardened connector for engaging at least one optical fiber with an optical fiber terminal.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating a sectional view of a hardened connector connected to a port of an optical fiber terminal in accordance with an embodiment of the present disclosure;
Fig. 2 is a pictorial snapshot illustrating an exploded view of a hardened connector which is connected to an end of a round shaped fiber optic cable in accordance with an embodiment of the present disclosure;
Fig. 3 is a pictorial snapshot illustrating an assembled view of the hardened connector connected to an end of the round shaped fiber optic cable in accordance with an embodiment of the present disclosure;
Fig. 4 is a pictorial snapshot illustrating a first assembled view of a hollow cylindrical body and a connection portion of the hardened connector in accordance with an embodiment of the disclosure;
Fig. 5 is a pictorial snapshot illustrating a second assembled view of the hollow cylindrical body and the connection portion in accordance with an embodiment of the disclosure;
Fig. 6 is a pictorial snapshot illustrating a sectional view of the the hollow cylindrical body and the connection portion in a connected state in accordance with an embodiment of the disclosure;
Fig. 7 is a pictorial snapshot illustrating a flow chart of a process of locking the hardened connector with respect to the port of the optical fiber terminal in accordance with an embodiment of the present disclosure;
Fig. 8 is a pictorial snapshot illustrating a flow chart of a process for unlocking the hardened connector with respect to the port of the optical fiber terminal in accordance with an embodiment of the present disclosure; and
Fig. 9 is a pictorial snapshot illustrating a flow chart of a method of aligning the hardened connector with respect to the port of the optical fiber terminal in accordance with an embodiment of the present disclosure;
Fig. 10 is a pictorial snapshot illustrating a first assembled view of a hollow cylindrical body and a connection portion of the hardened connector in accordance with another embodiment of the disclosure.

The optical fiber is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

**The following brief definition of terms shall apply throughout the present disclosure:**
Optical fiber- a light guide that provides high-speed data transmission. The optical fiber has one or more glass core regions and one or more glass cladding regions. The light moving through the glass core regions of the optical fiber relies upon the principle of total internal reflection, where the glass core regions have a higher refractive index (n1) than the refractive index (n2) of the glass cladding region of the optical fiber.

Core region - The term core region as used herein refers to an inner most cylindrical structure present in the center of the optical fiber, that is conFig.d to guide the light rays inside the optical fiber.

Cladding region - The term cladding region as used herein refers to one or more layered structure covering the core region of the optical fiber from the outside, that is conFig.d to possess a lower refractive index than the refractive index of the core region to facilitate total internal reflection of light rays inside the optical fiber. Further, the cladding region of the optical fiber may include an inner cladding layer coupled to the outer surface of the core region of the optical fiber and an outer cladding layer coupled to the inner cladding from the outside.

Coating layers - The bare fiber is coated with one or more primary coating layer and secondary coating layer or an ink layer.

Buffer layers - The buffer layer may be in the form of one or more buffer coating or one or more buffer tube. The buffer layer protects the delicate optical fibers from physical damage, moisture, and other environmental factors.

Buffer Coating - This is a protective layer applied directly onto the optical fiber. It is typically made of a soft, plastic material, such as acrylate, which cushions the fiber and protects it from microbends, stress, and minor abrasions.

Buffer Tube - This is a more rigid protective tube that surrounds one or more coated optical fibers. Buffer tubes are usually made from plastic materials like polyethylene or polybutylene terephthalate (PBT). They provide additional protection from physical impacts, moisture, and other environmental factors.

Strengthening layer - The at least one strengthening layer surrounds the one or more buffers in an optical fiber cable and typically provides additional mechanical strength and protection to the optical fibers, helping to prevent damage during installation and operation. Some of the common types of strength members used in optical fiber cables include Aramid Yarn, Steel wire, Fiber Reinforced Plastic, and Glass Reinforced Plastic.

Outer jacket - The outer jacket of an optical fiber cable is the outermost layer that encases and protects the entire cable assembly. The outer jacket provides a robust shield against environmental factors, mechanical damage, and chemical exposure. The outer jacket shields the internal components, including the optical fibers, buffer tubes, and strength members, from physical damage, moisture, chemicals, UV radiation, and other environmental factors. The outer jacket enhances the longevity of the optical fiber cable. Some of the common materials used for making the outer jacket include polyethylene (PE), polyvinyl chloride (PVC), polyurethane (PU), and low smoke zero halogen (LSZH) compounds.

Hardened Connector: A hardened connector is a type of fiber optic connector specifically designed to provide robust, reliable connections in environments that are subject to harsh conditions. These conditions can include extreme temperatures, moisture, dust, mechanical stress, and other environmental factors that would typically degrade the performance of standard fiber optic connectors. The hardened connector comes in the following forms Hardened SC (H-SC) Connectors, Hardened LC (H-LC) Connectors, and Hardened MPO Connectors.

Apart from the above terms which are defined above, all technical and scientific terms used herein have the same meaning as commonly understood by one ordinary skilled in the art to which this disclosure belongs. The device, methods, and examples provided herein are illustrative only and not intended to be limiting.

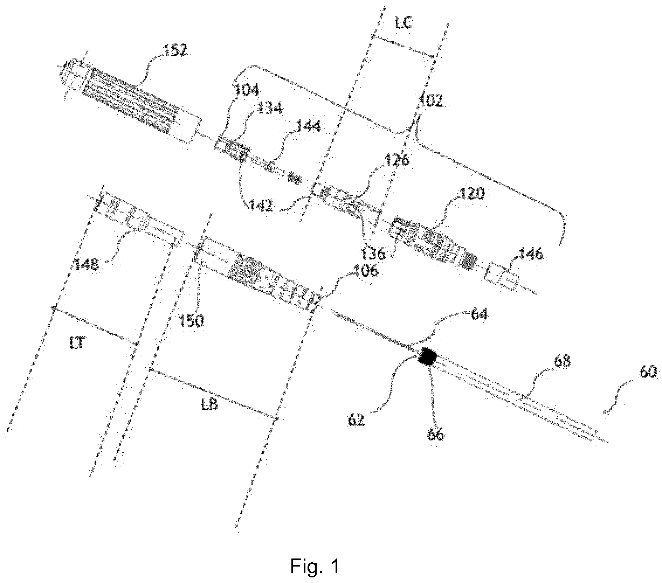

Fig. 1 is a pictorial snapshot illustrating a sectional view of a hardened connector connected to a port of an optical fiber terminal in accordance with an embodiment of the present disclosure. In particular, the hardened connector (100) may be used for connecting one or more optical fibers (62) which may form part of a fiber optic cable (60) with a port (52) forming part of the optical fiber terminal (50). Moreover, the fiber optic cable (60) includes one or more optical fibers (62); one or more buffers (64) that surrounds the one or more optical fibers (62); at least one strengthening layer (66) that surrounds the one or more buffers (64); and an outer jacket (68) that surrounds the at least one strengthening layer (66). Further, the optical fiber (62) typically comprises at least one cylindrical glass region (not shown) and a polymer region (not shown) surrounding the at least one cylindrical glass region. The at least one cylindrical glass region comprises at least one core (not shown) surrounded by a cladding region (not shown).

In accordance with an embodiment of the present disclosure, a hardened connector (100) is attached to an end of the fiber optic cable (60) for connecting the at least one optical fiber (62) to the optical fiber terminal (60). In particular, the optical fiber terminal (50) comprises a port (52) which receives the hardened connector (100), thereby connecting the at least one optical fiber (62) to the optical fiber terminal (50). Moreover, the port (52) of the optical fiber terminal (50) includes a movable feature (54) for locking the hardened connector (100) post the hardened connector (100) has been inserted into the port (52) so that the hardened connector (100) does not get inadvertently detached from the port (52) of the optical fiber terminal (50).

Once the movable feature (54) comes in contact with a first portion of the hardened connector (100), the hardened connector (100) is prohibited from inadvertently getting detached from the port (52) of the optical fiber terminal (50). Additionally, by operating the movable feature (54), the hardened connector (100) can be detached from the port (52) (which is an intended detachment of the hardened connector (100) from the port (52) of the optical fiber terminal (50)). The construction of the first portion of the hardened connector (100) should be such that the movable feature (54) does not require separate manual operation for locking purposes. In some aspect, the one or more movable feature (54) is a spring-loaded tab.

In accordance with an embodiment of the present disclosure, the port (52) of the optical fiber terminal (50) further includes a mating protrusion (56) for aligning the hardened connector (100) in a particular orientation with respect to the port (52). Aligning the hardened connector (100) with respect to the port (52) of the optical fiber terminal (50) is essential to ensure that an optical signal can pass from the optical fiber (62) to the optical fiber terminal (50). Typically, the mating protrusion (56) provided in the port (52) is in the form of an internal sleeve. Thus, the hardened connector (100) comprises a second portion which upon coming in contact with the mating protrusion (56) and aligns the connector (100) in a particular orientation with respect to the port (52).

In accordance with an embodiment of the present disclosure, when the hardened connector (100) is inserted into the port (52) of the optical fiber terminal (50), the second portion may either inherently come in contact with the mating protrusion (56) thereby aligning the connector (100) in a particular orientation with respect to the port (52). In case the second portion does not inherently come in contact with the mating protrusion (56) while inserting the hardened connector (100) into the port (52), the hardened connector (100) may be rotated till the second portion comes in contact with the mating protrusion (56) thereby aligning the connector (100) in a particular orientation with respect to the port (52).

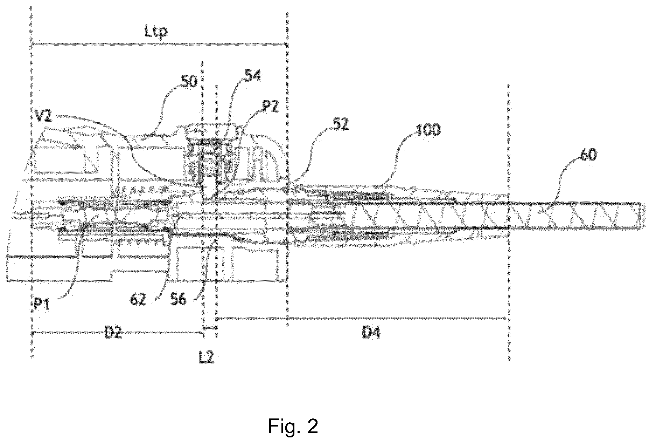

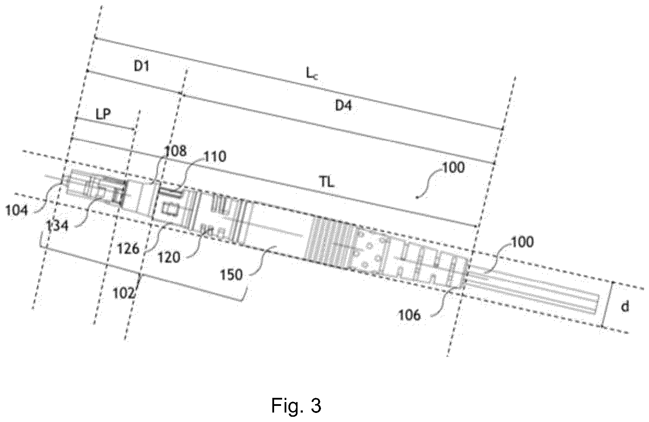

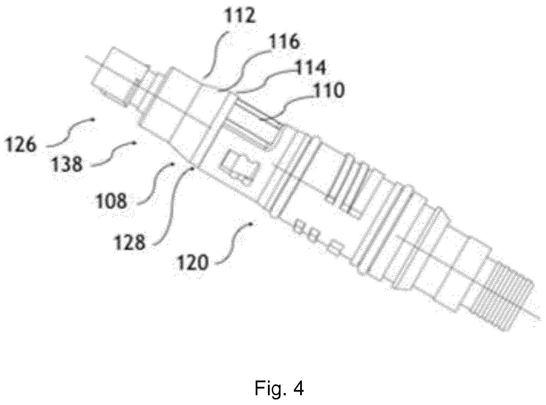

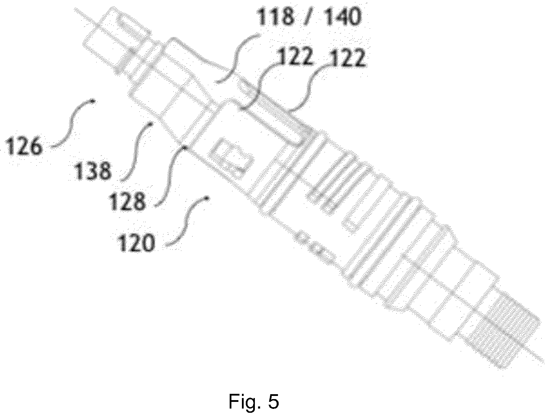

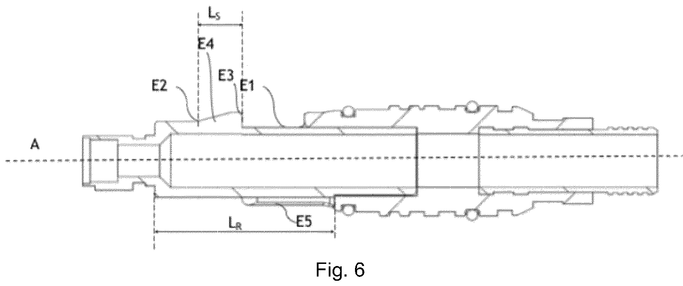

Fig. 2 and Fig. 3 are pictorial snapshots illustrating exploded and an assembled view of the hardened connector connected to an end of the round shaped fiber optic cable in accordance with various embodiments of the present disclosure. Fig. 4 and Fig. 5 are pictorial snapshots illustrating a first assembled view and a second assembled view of the hollow cylindrical body and the connection portion in accordance with an embodiment of the disclosure. Fig. 6 is a pictorial snapshot illustrating a first non-assembled state of the hollow cylindrical body and the connection portion in accordance with an embodiment of the disclosure. In particular, the hardened connector (100) comprises a multi-part assembly (102) comprising a front end (104); a rear end (106); a protruded skirt (108) positioned between the front end (104) and the rear end (106); and a first intermediate portion (110) positioned between the rear end (106) and the protruded skirt (108). Moreover, the first intermediate portion (110) of the multi-part assembly (102) has a first elevation (E1).

Further, the multi-part assembly (102) comprises a hollow cylindrical body (120), a connecting portion (126) configured to be removably engaged to the hollow cylindrical body (120) and an optical fiber plug (134) removably engaged with the connecting portion (126). The optical fiber plug (134) in turn comprises a ferrule (144). The connecting portion (126) is configured to be removably engaged to the hollow cylindrical body (120) by insertion into the hollow cylindrical body (120).

In accordance with an embodiment of the present disclosure, by way of a non-limiting example, the hollow cylindrical body (120) and the connecting portion (126) are coupled vide a first snap-fitting mechanism (136).

In accordance with an embodiment of the present disclosure, by way of another non-limiting example, the optical fiber plug (134) and the connecting portion (126) are coupled vide a second snap-fitting mechanism (142).

In accordance with an embodiment of the present disclosure, the optical fiber plug (134) after being engaged with the connecting portion (126) defines the front end (104) of the hardened connector (100). Further, the multi-part assembly (102) comprises a crimp ring (146) to hold the at least one strengthening layer (66), a heat shrink tube (148) encapsulating the crimp ring (146) to provide environmental sealing from dust, dirt and moisture etc., and a boot assembly (150) encapsulating the heat shrink tube (148).

In accordance with an embodiment of the present disclosure, the hardened connector (100) may comprises a cap (152) removably attached to the optical fiber plug (134).

In accordance with an embodiment of the present disclosure, the protruded skirt (108) is positioned on the connecting portion (126) so as to be positioned near a mating interface (128) of the hollow cylindrical body (120) and the connecting portion (126). In particular, the protruded skirt (108) comprises a front portion (112) located proximate to the front end (104) of the multi-part assembly (102); a rear portion (114) located proximate to the first intermediate portion (110) of the multi-part assembly (102); and a second intermediate portion (116) positioned between the front portion (112) and the rear portion (114).

In accordance with an embodiment of the present disclosure, the front portion (112) has a second elevation (E2), the rear portion (114) has a third elevation (E3). In particular, third elevation (E3) is greater than the first elevation (E1) and the second elevation (E2). Further, the second intermediate portion (116) has a varying elevation (E4) that varies between the second elevation (E2) and the third elevation (E3).

In accordance with an embodiment of the present disclosure, the protruded skirt (108) and the first intermediate portion (110) enabling locking of the hardened connector (100) within the port (52) of the optical fiber terminal (50), when the front end (104) of the hardened connector (100) is pushed into the port (52). In particular, the second intermediate portion (116) comes in contact with the one or more movable feature (54) when the hardened connector (100) is inserted into the port (52) and a first force is exerted on the hardened connector (100). This causes the variable elevation (E4) to exert radially outward force on the one or more movable feature (54) to displace the one or more movable features (54) in a radially outward direction from an initial position. Further, the second intermediate portion (116) has a varying elevation (E4) that varies between the second elevation (E2) and the third elevation (E3).

Thereafter, if a further force in the form of a second force is applied on the hardened connector (100) i.e. without withdrawing the hardened connector (100) from the port (52) a second force is exerted on the hardened connector (100), the first intermediate portion (110) comes in contact with the one or more movable feature (54). This causes release of the radially outward force exerted by the second intermediate portion (116) on the one or more movable feature (54). This is because the first intermediate portion (110) has the first elevation (E1) which is less than the rear portion (114) of the protruded skirt (108) which is equal to the third elevation (E3). This causes the one or more movable features (54) to attain the initial position, thereby locking the hardened connector (100) within the port (52) of the optical fiber terminal (50).

In accordance with an embodiment of the present disclosure, protruded skirt (108) has a skirt length (L_{S}) parallel to the connector axis (A), where the skirt length (L_{S}) is less than a connector length (L_{C}), the skirt length (L_{S}) being in a range of 8mm to 15mm.

Now coming to the aspect of the construction of the second portion of the connector (100) which upon coming in contact with the mating protrusion (56) aligns the connector (100) in a particular orientation with respect to the port (52). Further, the multi-part assembly (102) comprises a plurality of extended fingers (122) and a recessed portion (118) located between the plurality of extended fingers (122). The recessed portion (118) together with the plurality of extended fingers (122) define a channel (130). The channel (130) is configured to receive the mating protrusion (56) provided in the port (52), thereby enabling alignment of the hardened connector (100) in the port (52) of the optical fiber terminal (50).

In accordance with an embodiment of the present disclosure, the recessed portion (118) forms part of the connecting portion (126) while the plurality of extended fingers (122) form part of the hollow cylindrical body (120). By way of a non-limiting example, the plurality of extended fingers (122) extend towards a first end (124) of the hollow cylindrical body (120) which is proximate to the mating interface (128) of the hollow cylindrical body (120) and the connecting portion (126). Thus, the recessed portion (118) gets located between the plurality of extended fingers (122) when the connecting portion (126) is inserted into the hollow cylindrical body (120).

In accordance with an embodiment of the present disclosure, the recessed portion (118) begins at about a circumferential portion (138) of the connecting portion (126) and extends through the protruded skirt (108) to create a flat surface (140). In particular, the recessed portion (118) has a recessed length (L_{R}) parallel to the connector axis (A). Moreover, the recessed length (L_{R}) is less than a connector length (L_{C}) but greater than a skirt length (L_{S}). Further, the recessed portion (118) has an angular width in a range of 30° to 90° as measured along a circumferential direction of the hardened connector (100). Also, in an embodiment of the disclosure, the recessed portion (118) is defined by a flat surface (140) which is located at a fifth elevation (E5) along the entire recessed length (L_{R}) and along the entire angular width.

In accordance with an embodiment of the present disclosure, the fifth elevation (E5) is less than the first elevation (E1) and the second elevation (E2). Thus, it may be noted that the connecting portion (126) comprises the protruded skirt (108) and the recessed portion (118) located on a circumferential portion (138) thereof.

The specific construction of the first portion of the hardened connector (100) (which enables the hardened connector (100) to be locked with respect to the port (52) when the hardened connector (100) is inserted into the port (52) and which ensures that the hardened connector (100) does not get inadvertently detached from the port (52)) including the specific construction of the protruded skirt (108), the specific construction of the first intermediate portion (110), the positioning of the protruded skirt portion (108) specifically on the connecting portion (126), the positioning of the first intermediate portion (110) specifically on the hollow cylindrical body (120) allows for reducing a size of the hardened connector (100). In particular, it is now possible to manufacture it is now possible to manufacture the hardened connector (100) having a diameter less than or equal to 13 mm. Also, these aspects allow for easy manufacturing of the hardened connector (100). Further, these aspects also ensure that the hardened connector does not get inadvertently detached from the port (52). This means that the hardened connector (100) does not get detached from the port (52) due to shaking of the hardened connector (100) or the port (52). Also, this means that the hardened connector (100) does not get detached from the port (52) merely by pulling out the hardened connector (100).

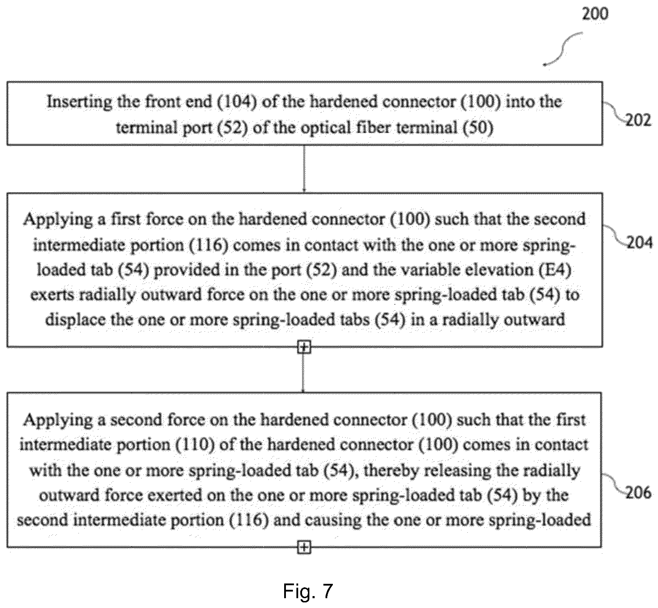

Fig. 7 is a pictorial snapshot illustrating a flow chart of a process of locking the hardened connector with respect to the port of the optical fiber terminal in accordance with an embodiment of the present disclosure. The process (200) of locking the hardened connector (100) with respect to the port (52) comprises inserting (202) the front end (104) of the hardened connector (100) into the terminal port (52) of the optical fiber terminal (50); applying (204) a first force on the hardened connector (100) such that the second intermediate portion (116) comes in contact with the one or more movable feature (54) provided in the port (52) and the variable elevation (E4) exerts radially outward force on the one or more movable feature (54) to displace the one or more movable features (54) in a radially outward direction from an initial position; and applying (204) a second force on the hardened connector (100) such that the first intermediate portion (110) of the hardened connector (100) comes in contact with the one or more movable feature (54), thereby releasing the radially outward force exerted on the one or more movable feature (54) by the second intermediate portion (116) and causing the one or more movable features (54) to attain the initial position.

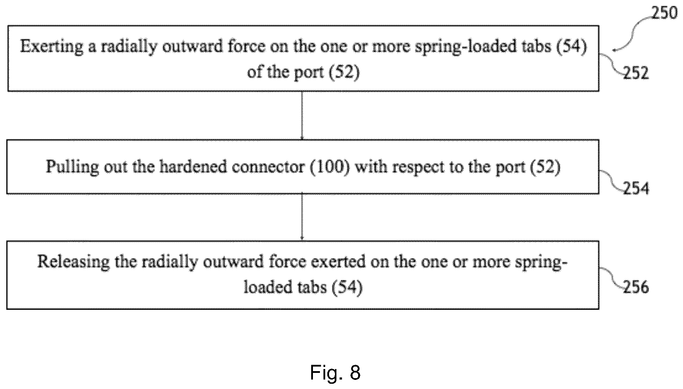

Fig. 8 is a pictorial snapshot illustrating a flow chart of a process for unlocking the hardened connector with respect to the port of the optical fiber terminal in accordance with an embodiment of the present disclosure. The process (250) of detaching the hardened connector (100) from the port (52) comprises, exerting (252) a radially outward force on the one or more movable features (54) of the port (52), pulling out (254) the hardened connector (100) with respect to the port (52), releasing (256), the radially outward force exerted on the one or more movable features (54).

Likewise, the specific construction of the second portion of the hardened connector (100) (which enables the hardened connector (100) to be aligned in a particular orientation with respect to the port (52)), including the specific construction of the recessed portion (118), the specific construction of the plurality of extended fingers (122), the positioning of the recessed portion (118) specifically on the connecting portion (126), the positioning of the plurality of extended fingers (122) specifically on the hollow cylindrical body (120) allows for reducing a size of the hardened connector (100). In particular, it is now possible to manufacture it is now possible to manufacture the hardened connector (100) having a diameter less than or equal to 13 mm. Also, these aspects allow for easy manufacturing of the hardened connector (100). Further, these aspects also ensure that the hardened connector (100) is aligned in a predetermined orientation with respect to the port (52) and that hardened connector (100) can be inserted into the port (52) (beyond a certain level) only when the hardened connector (100) is aligned in the predetermined orientation with respect to the port (52).

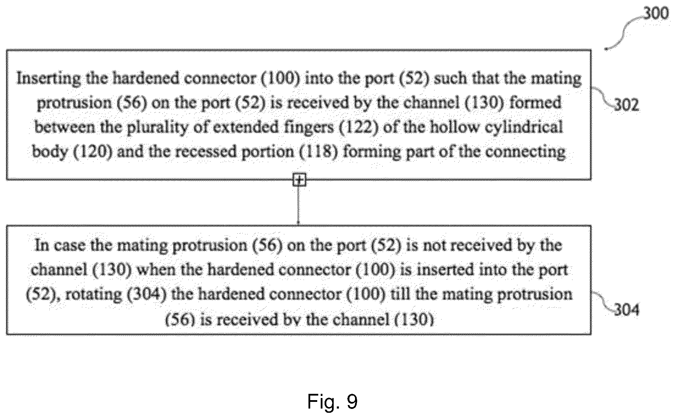

Fig. 9 is a pictorial snapshot illustrating a flow chart of a method of aligning the hardened connector with respect to the port of the optical fiber terminal in accordance with an embodiment of the present disclosure The process (300) comprises inserting (302) the hardened connector (100) into the port (52) such that the mating protrusion (56) on the port (52) is received by the channel (130) formed between the plurality of extended fingers (122) of the hollow cylindrical body (120) and the recessed portion (118) forming part of the connecting portion (126). In case the mating protrusion (56) on the port (52) is not received by the channel (130) when the hardened connector (100) is inserted into the port (52), the method further comprises rotating (304) the hardened connector (100) till the mating protrusion (56) is received by the channel (130).

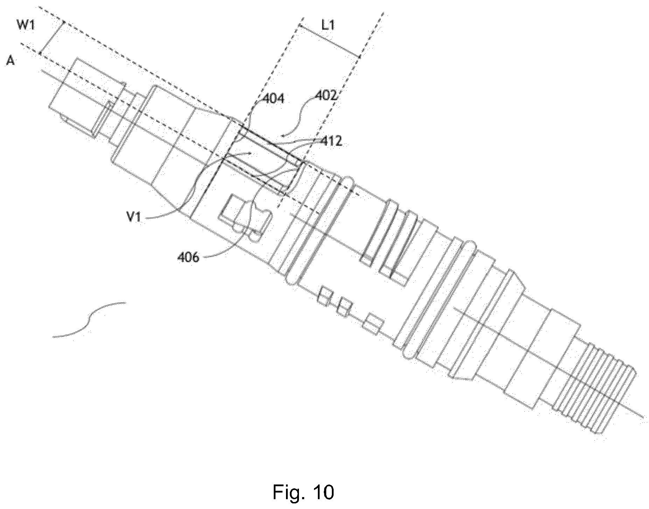

Fig. 10 is a pictorial snapshot illustrating a first assembled view of a hollow cylindrical body and a connection portion of the hardened connector in accordance with another embodiment of the disclosure. A hardened connector (100) configured to engage with a port (52) of an optical fiber terminal (50), comprising a locking portion (402) define by a front wall portion (404) and a rear wall portion (406). The front wall portion (404) and the rear wall portion (406) prevents relative axial movement between the hardened connector (100) and the port (52) along an axis (A) of the hardened connector (100), when a movable feature (54) of the port (52) or the optical fiber terminal (50) is inserted between the front wall portion (404) and the rear wall portion (406). In particular, the insertion of the movable feature (54) is perpendicular to the axis (A) of the hardened connector (100). Moreover, the front wall portion (406) is formed by a protruded skirt (108) located over a connecting portion (126) of the hardened connector (100) where the connecting portion (126) is located near the middle of the hardened connector (100). Further, the locking portion (402) formed by the front wall portion (404), the rear wall portion (406) and the side wall portions (412) has a volume (V1) of 20 cubic mm to 40 cubic mm.

In accordance with an embodiment of the present disclosure, the rear wall portion (406) is formed by a hollow cylindrical body (120) of the hardened connector (100) where the hollow cylindrical body (120) is located near the rear of the hardened connector (100).

In accordance with an embodiment of the present disclosure, the front wall portion (404) and the rear wall portion (406) are connected by side wall portions (412). In particular, the side wall portions (412) can be one or more of slanted portion or elevated portion or flat portion where the side wall portions (412) contribute to prevent the relative rotational movement between the hardened connector (100) and the port (52).

In accordance with an embodiment of the present disclosure, a hardened connector (100) conFig.d to engage with a port (52) of an optical fiber terminal (50) such that relative rotational movement between the hardened connector (100) and the port (52) is restricted at the side wall portions (412). Further, the side wall portions (412) of the locking portion (402) are formed by a plurality of extended fingers (122) of the hollow cylindrical body (120).

The relative rotational movement between the hardened connector (100) and the port (52) is restricted by engagement of side wall portions (412) connecting a front wall portion (404) and a rear wall portion (406) of a locking portion (402) with a movable feature (54) of the port (50). Further the engagement of an optical fiber plug (134) with mating shape of the terminal (50) also restricts the relative movement. Thereby, the relative rotational movement between the hardened connector (100) and the port (52) is restricted at at-least two different restriction points (P1, P2) and the two different restriction points (P1, P2) are separated by at-least 10% of the hardened connector length (Lc).

In accordance with an embodiment of the present disclosure, a hardened connector (100) configured to engage with a port (52) of an optical fiber terminal (50). Further, the hardened connector (100) is inserted into the port (52) such that at-least 35% of the hardened connector length (Lc) goes inside the optical fiber terminal (50).

In accordance with an embodiment of the present disclosure, the hardened connector (100) includes an optical fiber plug (134) with a ferrule (144) having an allowable axial movement of 0.1 mm inside the hardened connector (100) after engagement of the hardened connector (100) to the optical fiber terminal (50). Further, by the way of a non- limiting example, a total length (TL) of the hardened Connector (100) is 112.5mm (Fig. 3). A length (LP) of the optical fiber plug (134) is 15mm (Fig. 3). A minimum length (LT) of the heat shrink tube (148) is 40mm (Fig. 2). A length (LC) of the connecting portion (126) is 33.55mm (Fig. 2). The length (LB) of the boot assembly (150) is 60mm (Fig. 2).

By the way of another non-limiting example, for the locking portion (402) a width (W1) of the first elevation (E1) is in the range of 4.15 - 6.618mm, a length (L1) of the first elevation (E1) is 6.3mm, the Volume (V1) of the first elevation (E1) of the first intermediate portion (110) is about 26.22 mm³ (Fig. 10). For the movable portion (54) the width (W2) (not shown) is 3.2mm, the length (L2) is 9.3mm and the Volume (V2) is about 24.776mm³ (Fig. 1).

Referring again to Fig. 3, there is illustrated a sectional view of the first assembly of a hollow cylindrical body and a connection portion of the hardened connector in accordance with an embodiment of the disclosure. By the way of another non-limiting example, the distance (D1) of the locking portion (402) from the front end (104) is 26mm. The distance (D3) of the locking portion (402) from the rear end (106) is 85.7mm. The distance (D2) of the movable portion (54) from the front end (104) is 26mm (Fig. 1). The distance (D4) of the movable portion (54) from the rear end (106) is 85.7mm (Fig. 1).

By the way of another non-limiting example, the total length (Ltp) of the hardened connector (100) going inside the optical fiber terminal (50) is 49.9mm (Fig. 1). The maximum diameter (d) of the hardened Connector (100) is 13mm (Fig. 3).

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A hardened connector (100) configured to engage with a port (52) of an optical fiber terminal (50), the port (52) comprising one or more movable feature (54) protruding radially inwardly towards a center portion of the port (52) comprising a multi-part assembly (102) **characterised in that**:
a front end (104);
a rear end (106);
a protruded skirt (108) positioned between the front end (104) and the rear end (106); and
a first intermediate portion (110) positioned between the rear end (106) and the protruded skirt (108), the first intermediate portion (110) of the multi-part assembly (102) having a first elevation (E1);
wherein the protruded skirt (108) comprising:
a rear portion (114) having a third elevation (E3) located proximate to the first intermediate portion (110) of the multi-part assembly (102); and
a second intermediate portion (116) positioned between the front portion (112) and the rear portion (114); and
wherein the protruded skirt (108) and the first intermediate portion (110) enabling locking of the hardened connector (100) within the port (52) of the optical fiber terminal (50), when the front end (104) of the hardened connector (100) is pushed into the port (52).

2. The hardened connector as claimed in claim 1, wherein a front portion (112) having a second elevation (E2) located proximate to the front end (104) of the multi-part assembly (102), the third elevation (E3) being greater than the first elevation (E1) and the second elevation (E2)
wherein the second intermediate portion (116) has a varying elevation (E4) that varies between the second elevation (E2) and the third elevation (E3).

3. The hardened connector as claimed in claim 1, wherein:
the second intermediate portion (116) comes in contact with the one or more movable feature movable feature (54) when a first force is exerted on the hardened connector (100), causing the variable elevation (E4) to exert radially outward force on the one or more movable feature (54) to displace the one or more movable feature (54) in a radially outward direction from an initial position; and
the first intermediate portion (110) comes in contact with the one or more movable feature (54) when a second force is applied on the hardened connector (100), causing release of the radially outward force exerted by the second intermediate portion (116) on the one or more movable feature (54) and causing the one or more movable feature (54) to attain the initial position, thereby locking the hardened connector (100) within the port (52) of the optical fiber terminal (50).

4. The hardened connector as claimed in claim 1, wherein the protruded skirt (108) has a skirt length (L_{S}) parallel to the connector axis (A), where the skirt length (L_{S}) is less than a connector length (L_{C}), the skirt length (L_{S}) being in a range of 8mm to 15mm.

5. The hardened connector as claimed in claim 1, comprising a recessed portion (118) beginning at the front end (104) and extending rearward at least till the first intermediate portion (110) and
wherein the recessed portion (118) having a recessed length (L_{R}) parallel to the connector axis (A),
wherein the recessed length (L_{R}) is less than a connector length (L_{C}) and greater than a skirt length (L_{S}), the recessed portion (118) having an angular width in a range of 30° to 90° as measured along a circumferential direction of the hardened connector (100), and
wherein the recessed portion (118) having a fifth elevation (E5) along the entire recessed length (L_{R}) and along the entire angular width, the fifth elevation (E5) being less than the first elevation (E1) and the second elevation (E2).

6. The hardened connector as claimed in claim 1, wherein the multi-part assembly (102) comprises:
a hollow cylindrical body (120) comprising a plurality of extended fingers (122) at a first end (124) of the hollow cylindrical body (120);
a connecting portion (126) configured to be removably engaged to the hollow cylindrical body (120) by insertion into the hollow cylindrical body (120), the protruded skirt (108) being positioned on the connecting portion (126) near a mating interface (128) of the hollow cylindrical body (120) and the connecting portion (126), and
the recessed portion (118) being positioned on the connecting portion (126) to extend beyond the mating interface (128) of the hollow cylindrical body (120) and the connecting portion (126);
a channel (130) formed between the plurality of extended fingers (122) of the hollow cylindrical body (120) and the recessed portion (118) forming part of the connecting portion (126), when the connecting portion (126) is engaged to the hollow cylindrical body (120),
wherein the channel (130) being configured to receive a mating protrusion (56) provided in the port (52), thereby enabling alignment of the hardened connector (100) in the port (52) of the optical fiber terminal (50); and
an optical fiber plug (134) removably engaged with the connecting portion (126), where the optical fiber plug (134) defines the front end (104) of the hardened connector (100).

7. The hardened connector as claimed in claim 8, wherein the connecting portion (126) comprises a circumferential portion (138) defining the protruded skirt (108) and the recessed portion (118), the recessed portion (118) being defined by a flat surface (140).

8. The hardened connector as claimed in claim 8, wherein the hollow cylindrical body (120) and the connecting portion (126) are coupled via a snap-fitting mechanism (136).

9. A method of locking a hardened connector (100) in a port (52) of an optical fiber terminal (50) **characterised in that**:
inserting a front end (104) of the hardened connector (100) into the terminal port (52) of the optical fiber terminal (50);
applying a first force on the hardened connector (100) such that a second intermediate portion (116) comes in contact with one or more movable feature (54) provided in the port (52) and a variable elevation (E4) exerts radially outward force on the one or more movable feature (54) to displace the one or more movable features (54) in a radially outward direction from an initial position; and
applying a second force on the hardened connector (100) such that a first intermediate portion (110) of the hardened connector (100) comes in contact with the one or more movable feature (54), thereby releasing the radially outward force exerted on the one or more movable feature (54) by the second intermediate portion (116) and causing the one or more movable features (54) to attain the initial position.

10. A method of unlocking a hardened connector (100) from a port (52) of an optical fiber terminal (50)**characterised in that**:
exerting radially outward force on one or more movable feature (54) of the port (52);
pulling out the hardened connector (100) from the port (52); and
releasing the movable features (54) of the port (52).

11. A method of aligning a hardened connector (100) in a port (52) of an optical fiber
terminal (50) **characterised in that**:
receiving a mating protrusion (56) on the port (52) by a channel (130) formed between a plurality of extended fingers (122) of a hollow cylindrical body (120) and a recessed portion (118) of a connecting portion (126) when the connecting portion (126) is engaged to the hollow cylindrical body (120); and
optionally rotating the hardened connector (100) till the mating protrusion (56) is received by the channel (130);
wherein a locking portion (402) defined by a front wall portion (404) and a rear wall portion (406); the front wall portion (404) and the rear wall portion (406) prevents relative axial movement between the hardened connector (100) and the port (52) along an axis (A) of the hardened connector (100), when a movable feature (54) of the port (52) or the optical fiber terminal (50) is inserted between the front wall portion (404) and the rear wall portion (406).

12. The hardened connector (100) as claimed in claim 11, wherein the insertion of the movable feature (54) is perpendicular to the axis (A) of the hardened connector (100).

13. The hardened connector (100) as claimed in claim 11, wherein the front wall
portion (406) is formed by a protruded skirt (108) located over a connecting portion (126) of the hardened connector (100) where the connecting portion (126) is located near the middle of the hardened connector (100) and
wherein the rear wall portion (406) is formed by a hollow cylindrical body (120) of the hardened connector (100) where the hollow cylindrical body (120) is located near the rear of the hardened connector (100)
wherein the front wall portion (404) and the rear wall portion (406) are connected by side wall portions (412), where the side wall portions (412) can be one or more of slanted portion or elevated portion or flat portion where the side wall portions (412) contribute to prevent the relative rotational movement between the hardened connector (100) and the port (52).

14. The hardened connector as claimed in claim 11, wherein the relative rotational movement between the hardened connector (100) and the port (52) is restricted by at-least two different restriction points (P1, P2)
wherein the at-least the two restriction points (P1, P2) are separated by at-least 10% of the hardened connector length (Lc)
wherein the relative rotational movement between the hardened connector (100) and the port (52) is restricted by:
engagement of side wall portions (412) connecting a front wall portion (404) and a rear wall portion (406) of a locking portion (402) with a movable feature (54) of the port (50),
engagement of an optical fiber plug (134) with mating shape of the terminal (50).

15. The hardened connector as claimed in claim 11, wherein the hardened connector (100) is inserted into the port (52) such that at-least 35% of the hardened connector length (Lc) goes inside the optical fiber terminal (50) and
wherein the hardened connector (100) includes an optical fiber plug (134) with a ferrule (144) having an allowable axial movement of 0.1 mm inside the hardened connector (100) after engagement of the hardened connector (100) to the optical fiber terminal (50).
